# FASCICULE DE BREVET EUROPEEN

(11) **EP 0 847 501 B1**
(45) Date de publication et mention de la délivrance du brevet: **17.10.2001**
(21) Numéro de dépôt: 96931878.1
(22) Date de dépôt: 19.09.1996
(51) Int. Cl.: F16B 45/02

(54) **MOUSQUETON DE SECURITE**
SICHERHEITSKARABINERHAKEN
SAFETY SNAP HOOK

(30) Priorité: 22.09.1995 FR 9511345
(43) Date de publication de la demande: 17.06.1998
(73) Titulaire: WICHARD, 63300 Thiers (FR)
(72) Inventeur: MIHAILOVIC, Pierre, F-63122 Manson (FR)
(74) Mandataire: Bratel, Gérard
(86) Numéro de dépôt international: FR9601461
(87) Numéro de publication internationale: WO9711281

(56) Documents cités:
- DE-A- 3 126 066

## Description

La présente invention concerne un mousqueton de sécurité dit "à double effet", c'est-à-dire nécessitant deux actions différentes pour pouvoir être ouvert.

Ce mousqueton peut être utilisé dans tout domaine d'activité, et en particulier dans le domaine du nautisme, par exemple pour l'arrimage d'un harnais de sécurité porté par le navigateur à un câble fixé au pont du bateau, dit "ligne de vie".

Un mousqueton comprend un corps évidé, en forme générale de crochet, dont l'ouverture latérale est fermée par un linguet. Ce linguet est monté pivotant sur le corps et peut basculer entre une position de fermeture du mousqueton, dans laquelle l'extrémité libre du linguet vient en prise avec la branche correspondante du corps, et une position d'ouverture du mousqueton, dans laquelle le linguet est pivoté vers l'intérieur du corps.

Il est connu par le document DE 31 26 066 de réaliser le linguet sous forme "d'épingle", c'est-à-dire au moyen d'une tige en métal déformable élastiquement, pliée pour former une boucle ouverte, les extrémités recourbées de cette tige n'étant pas coaxiales. Le linguet pivote sur le corps autour de ces extrémités, de sorte que la tige est déformée lors de ce pivotement et que le linguet est ramené, par rappel élastique, en position de fermeture du mousqueton. L'un des trous du corps recevant l'une desdites extrémités recourbées a une forme oblongue, tandis que l'autre des trous du corps recevant l'autre extrémité recourbée a une forme cylindrique telle que cette autre extrémité recourbée est montée pivotante sur le corps autour d'un axe fixe. Aucun verrouillage du linguet en position de fermeture du mousqueton n'est réalisé.

Ces mousquetons classiques ont pour inconvénient de pouvoir s'ouvrir accidentellement, ce qui interdit leur utilisation lorsque la sécurité est concernée, comme dans le cas de l'amarrage d'un harnais.

Pour remédier à cet inconvénient, il est connu d'équiper le mousqueton de moyens de sécurité, assurant en tout état de cause la fermeture du mousqueton.

Un mousqueton de ce type comprend un manchon cylindrique pouvant coulisser sur l'extrémité libre du linguet et sur la branche correspondante du corps du mousqueton, de manière à occuper soit une position active, dans laquelle le mousqueton s'étend à la fois sur cette extrémité libre et sur cette branche, et interdit tout mouvement du linguet, soit une position effacée, dans laquelle le manchon est reculé pour s'étendre uniquement sur le linguet et permet le pivotement de celui-ci. Le manchon est normalement maintenu en position active par un ressort hélicoïdal, engagé sur le linguet, et peut être immobilisé par vissage sur l'extrémité de la branche du corps.

D'autres mousquetons de sécurité comprennent une tige escamotable formant un arc-boutant, qui maintient le linguet en position de fermeture.

Les mousquetons de sécurité existants présentent l'inconvénient de ne pas être très faciles à manipuler puisqu'ils impliquent l'utilisation des deux mains, l'une effaçant le manchon ou la tige escamotable précités, et l'autre appuyant sur le linguet pour le faire pivoter.

L'accrochage du mousqueton est difficile, étant donné que les deux mains de l'utilisateur viennent obstruer l'ouverture du mousqueton. Dans certaines conditions, particulièrement en cas de mer difficile, l'utilisateur se trouve momentanément dans l'impossibilité de se tenir au bateau, ce qui peut être particulièrement dangereux.

Les mousquetons de sécurité existants présentent par ailleurs l'inconvénient d'être constitués d'un nombre relativement important de pièces, qui conduit à un coût de fabrication élevé et augmente le risque de grippage en milieu marin.

La présente invention vise à remédier à l'ensemble de ces inconvénients, en fournissant un mousqueton de sécurité facile à manipuler dans toutes les conditions, en restant simple et relativement peu onéreux à fabriquer.

Ce mousqueton comprend, de manière connue en soi, un corps en forme générale de crochet et un linguet "en épingle".

Selon l'invention :
- le linguet est conformé de manière à ce que ses extrémités recourbées soient normalement maintenues dans une position d'éloignement, dans laquelle elles sont situées à une distance l'une de l'autre interdisant toute possibilité de pivotement par rapport au corps, et peut être déformé de manière à amener lesdites extrémités recourbées dans une position de rapprochement mutuel, pour rendre ce pivotement possible, et
- le corps du mousqueton comprend une lumière dans laquelle est engagée et peut coulisser l'une desdites extrémités recourbées, alors que l'autre extrémité recourbée est montée pivotante sur le corps autour d'un axe fixe, cette lumière étant conformée pour permettre le coulissement de l'extrémité recourbée engagée en elle entre les positions d'éloignement et de rapprochement des deux extrémités recourbées du linguet.

Ainsi, le linguet ne peut être basculé en position d'ouverture du mousqueton sans avoir été préalablement déformé afin de rapprocher ses deux extrémités recourbées l'une de l'autre. Deux actions différentes sont donc nécessaires pour ouvrir ce mousqueton, ce qui permet son utilisation en tant que mousqueton de sécurité.

Ce mousqueton n'est au minimum constitué que par deux pièces, et reste simple et relativement peu onéreux à fabriquer.

De préférence, le linguet n'est pas dans sa forme neutre lorsqu'il est monté sur le corps et que ses extrémités recourbées sont éloignées l'une de l'autre, mais est conformé de manière à être précontraint dans le sens du rapprochement de ces extrémités. La force de rappel due à cette précontrainte assure le maintien des extrémités recourbées à distance l'une de l'autre, et la force nécessaire au rapprochement de ces extrémités est augmentée, ce qui réduit encore les risques d'ouverture intempestive.

De préférence, le mousqueton comprend des moyens venant prendre appui sur le linguet pour réaliser la déformation de celui-ci.

Ces moyens peuvent être simplement constitués par une patte de prise d'appui fixée au linguet, par un curseur déplaçable en coulissement, ou par tout autre moyen approprié. Selon une forme de réalisation préférée de l'invention, ces moyens sont constitués par un levier monté pivotant sur le corps du mousqueton, permettant une déformation facile du linguet.

Avantageusement, le corps du mousqueton comprend un oeillet à son extrémité recevant la base du linguet, et le levier comprend une paroi tubulaire prenant appui et glissant contre le corps au niveau de cet oeillet. Cette paroi tubulaire constitue l'axe de pivotement du levier et peut recevoir à travers elle le cordage auquel le mousqueton est relié. Le montage du levier sur le corps est ainsi facile à réaliser.

Le levier peut être en une seule pièce clipée ou rivetée sur le corps, ou en deux pièces prenant ce corps en sandwich, réunies par tout moyen approprié tel que collage, clipage ou rivetage.

Avantageusement, le levier s'étend sur la majeure partie du côté du corps opposé au linguet, sur l'extérieur de celui-ci.

Ainsi, l'ouverture du mousqueton peut être réalisée par une seule main, selon un mouvement naturel et instinctif, le pivotement du levier dans le sens du rapprochement des extrémités recourbées du linguet étant réalisé par action des doigts autres que le pouce sur ce levier, tandis que le pivotement du linguet en position d'ouverture du mousqueton est réalisé par action du pouce sur le linguet.

L'exercice accidentel de ces deux forces de directions opposées, simultanément sur les deux organes, est quasiment impossible, de sorte que le mousqueton garantit une sécurité parfaite.

De préférence, le levier présente une section transversale en forme de U et enveloppe le côté du corps le long duquel il s'étend, ce qui confère une structure homogène au mousqueton, sans arêtes blessantes.

Pour sa bonne compréhension, l'invention est à nouveau décrite ci-dessous en référence au dessin schématique annexé représentant, à titre d'exemple non limitatif, une forme de réalisation préférée du mousqueton qu'elle concerne.
La figure 1 en est une vue en perspective, alors qu'il est fermé ;
la figure 2 en est une vue de côté et en élévation ;
la figure 3 en est une vue de dessus, en coupe selon la ligne III-III de la figure 2, et
les figures 4 et 5 en sont des vues de côté et en élévation, similaires à la figure 2, respectivement en cours d'ouverture et à l'état d'ouverture complète.

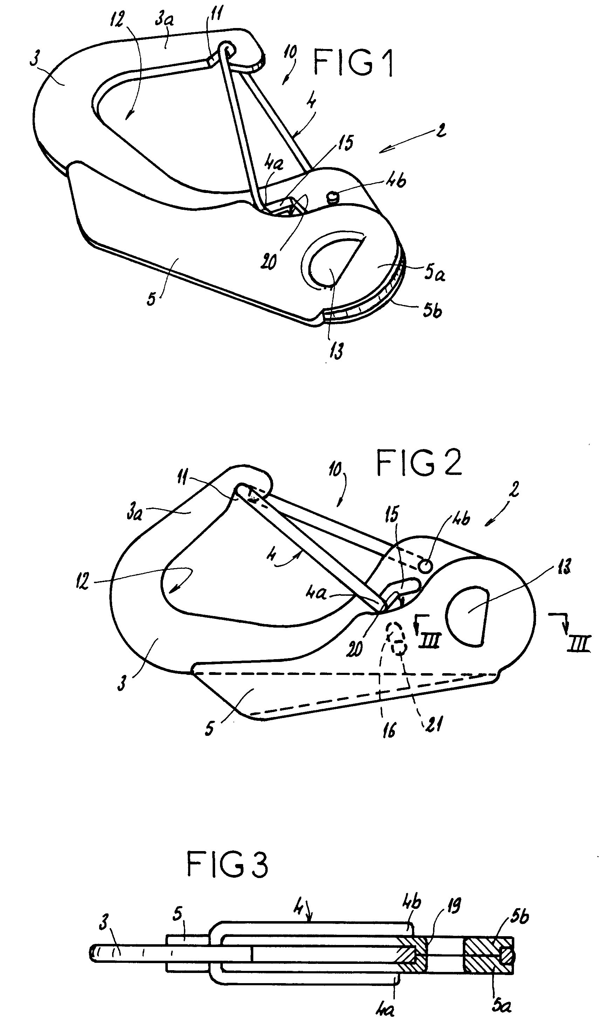

Les figures 1 à 3 représentent, sous différents angles, un mousqueton de sécurité 2, notamment utilisable dans le domaine du nautisme.

Le mousqueton 2 comprend un corps 3, un linguet 4 et un levier 5.

Le corps 3 présente la forme générale d'un crochet, et définit une ouverture latérale 10 fermée par le linguet 4, une branche recourbée 3a comprenant une encoche 11 pour l'engagement de l'extrémité libre du linguet 4, et un évidement 12 recevant l'élément d'amarrage (non représenté), tel qu'un cordage.

A son extrémité opposée à la branche 3a, le corps 3 comprend un oeillet 13 permettant l'engagement d'un cordage d'amarrage auquel le mousqueton 2 est relié.

En outre, le corps 3 comprend une lumière 15 en forme de chevron, dont la forme et la fonction seront explicitées plus loin, ainsi qu'une lumière 16 en léger arc de cercle centré sur l'axe de l'oeillet 13.

Le linguet 4 est en "épingle", c'est-à-dire est constitué par une tige en métal déformable élastiquement, pliée pour former une boucle ouverte. L'une 4a des extrémités recourbées de la tige est engagée et peut coulisser dans la lumière 15, alors que l'autre extrémité recourbée 4b est engagée et peut pivoter autour d'un axe fixe dans un alésage aménagé dans le corps 3.

Dans sa position représentée aux figures 1 à 3, le linguet 4 est légèrement précontraint dans le sens du rapprochement des extrémités recourbées 4a,4b.

Il apparaît en référence à la figure 2 que la portion de la lumière 15 dans laquelle se trouve l'extrémité 4a est orientée sensiblement perpendiculairement à la branche latérale du linguet 4 raccordée à cette même extrémité 4a. L'autre portion de la lumière 15 forme un angle d'environ 145° avec cette première portion, et s'oriente vers l'extrémité du corps 3 comprenant l'oeillet 13.

Le levier 5 présente une section transversale en forme de U et enveloppe la majeure partie du côté du corps 3 opposé au linguet 4, ainsi que la portion de ce corps 3 délimitant l'oeillet 13.

Comme le montre la figure 3, le levier 5 est constitué par deux pièces 5a,5b prenant le corps 3 en sandwich. Chacune de ces pièces 5a,5b présente une paroi tubulaire de forme extérieure circulaire, conformée pour être engagée dans l'oeillet 13 du corps 3, et pour prendre appui et glisser contre le corps 3 au niveau de cet oeillet 13. Ces parois constituent le pivot 19 du levier 5 par rapport au corps 3, et peuvent recevoir à travers elles le cordage (non représenté) auquel le mousqueton 2 est relié.

Une fois mises en place, les deux pièces 5a,5b sont réunies par tout moyen approprié tel que collage, clipage ou rivetage.

La pièce 5a située du côté de l'extrémité recourbée 4a comprend, à proximité de la lumière 15, un profil concave 20 le long duquel cette extrémité 4a peut glisser lors du pivotement du levier 5.

En outre, l'une des pièces 5a,5b est pourvue d'un téton 21 engagé et pouvant coulisser dans la lumière 16.

En pratique, du fait de la précontrainte précitée du linguet 4, l'extrémité recourbée 4a est normalement maintenue dans la portion de la lumière 15 la plus éloignée de l'extrémité recourbée 4b, comme le montrent les figures 1 à 3. L'angle que forment alors entre elles les branches latérales du linguet 4 est tel que les extrémités recourbées 4a,4b sont situées à une distance l'une de l'autre interdisant tout pivotement du linguet 4 par rapport au corps 3.

La lumière 16 et le téton 21 sont positionnés de manière à ce que le levier 5 soit placé au contact de cette extrémité recourbée 4a, et qu'il soit maintenu par celle-ci dans la position représentée sur ces figures de pivotement vers l'extérieur par rapport au corps 3.

L'utilisateur, lorsqu'il désire ouvrir le mousqueton 2, applique une pression plus ou moins simultanée sur le levier 5, avec les doigts autres que le pouce, et sur le linguet 4, avec le pouce.

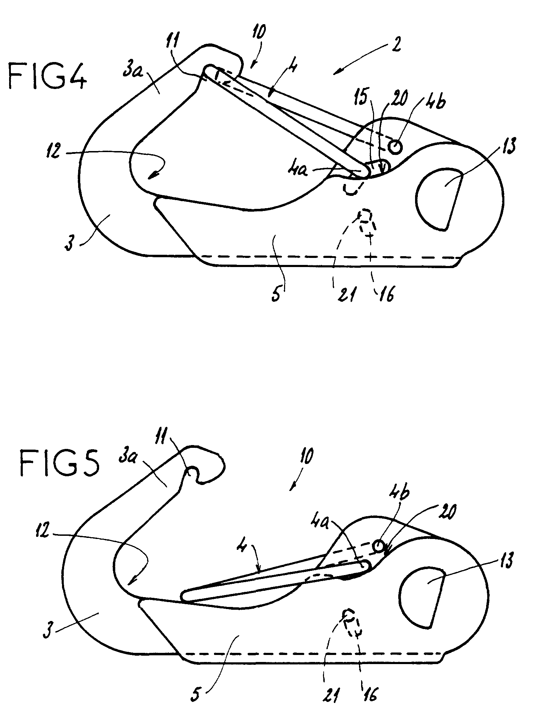

Le linguet 4 étant immobile, cette pression opère un pivotement du levier 5 en direction du corps 3, comme montré à la figure 4. Ce pivotement a pour effet de déplacer progressivement l'extrémité 4a dans la portion de la lumière 15 orientée perpendiculairement à la branche latérale du linguet 4, jusqu'au point médian de cette lumière 15.

Les extrémités recourbées 4a,4b sont alors suffisamment rapprochées pour permettre d'initier le pivotement du linguet 4. Ce pivotement provoque l'engagement de l'extrémité 4a dans l'autre portion de la lumière 15, dont l'orientation permet un recul de l'extrémité 4a et un rapprochement supplémentaire des extrémités 4a et 4b. Ce recul et ce rapprochement rendent possible la poursuite du mouvement du linguet 4 jusqu'à la position de complet pivotement montrée à la figure 5.

La déformation du linguet 4 due au rapprochement des extrémités 4a et: 4b permet le retour instantané du linguet 4 en position de fermeture du mousqueton dès que la pression exercée sur le linguet est relâchée.

L'invention fournit ainsi un mousqueton de sécurité 2 ayant les nombreux avantages indiqués plus haut, en particulier ceux d'être facile à manipuler dans toutes les conditions, et de rester simple et relativement peu onéreux à fabriquer.

Il va de soi que l'invention n'est pas limitée à la forme de réalisation décrite ci-dessus à titre d'exemple mais qu'elle en embrasse, au contraire, toutes les variantes de réalisation. Ainsi, la lumière 15 peut avoir une forme autre que celle représentée au dessin, l'essentiel étant que cette lumière comprenne une paroi d'appui de l'extrémité 4a, empêchant, à l'état non déformé du linguet 4, tout pivotement de ce dernier, et une longueur telle qu'elle permette un rapprochement suffisant des extrémités 4a,4b pour rendre ce pivotement possible.

En outre, la lumière 16 et le téton 21 peuvent être respectivement remplacés par une lumière en secteur de cercle, aménagée dans la paroi du corps 3 délimitant l'oeillet 13 et centrée sur l'axe de cet oeillet, et par un ergot faisant saillie radialement de la paroi tubulaire formant le pivot 19, vers l'extérieur de celle-ci, engagé dans ladite lumière en secteur de cercle.

## Revendications

1. Mousqueton de sécurité, comprenant un linguet (4) dit "en épingle", c'est-à-dire constitué par une tige en matériau déformable élastiquement, pliée pour former une boucle ouverte, les extrémités recourbées (4a,4b) de cette tige, autour desquelles s'effectue le pivotement du linguet (4) par rapport au corps (3) du mousqueton (2), n'étant pas coaxiales, l'ensemble étant conformé de telle sorte que ladite tige est déformée élastiquement lors de ce pivotement et que le linguet (4) est ramené, par rappel élastique, en position de fermeture du mousqueton (2) ; l'un des trous du corps (3) recevant l'une desdites extrémités recourbées (4a,4b) a une forme oblongue, tandis que l'autre des trous du corps (3) recevant l'autre extrémité recourbée (4b) a une forme cylindrique telle que cette autre extrémité recourbée (4b) est montée pivotante sur le corps (3) autour d'un axe fixe ;
mousqueton **caractérisé en ce que**
- le linguet (4) est conformé de manière à ce que ses extrémités recourbées (4a,4b) soient normalement maintenues dans une position d'éloignement, dans laquelle elles sont situées à une distance l'une de l'autre interdisant toute possibilité de pivotement par rapport au corps (3), et peut être déformé de manière à amener lesdites extrémités recourbées (4a,4b) dans une position de rapprochement mutuel, pour rendre ce pivotement possible, et **en ce que**
- ledit trou du corps (3) ayant la forme oblongue est constitué par une lumière (15) dans laquelle est engagée et peut coulisser ladite extrémité recourbée (4a) engagée dans ce trou, cette lumière (15) étant conformée pour permettre le coulissement de cette extrémité recourbée (4a) entre les positions d'éloignement et de rapprochement des deux extrémités recourbées (4a,4b) du linguet (4).

2. Mousqueton selon la revendication 1, **caractérisé en ce que** le linguet (4) est conformé de manière à être précontraint dans le sens du rapprochement des extrémités (4a,4b) lorsqu'il est monté sur le corps (3) et que ces extrémités recourbées (4a,4b) sont éloignées l'une de l'autre.

3. Mousqueton selon la revendication 1 ou la revendication 2, **caractérisé en ce qu'**il comprend des moyens (5) venant prendre appui sur le linguet (4) pour réaliser la déformation de celui-ci.

4. Mousqueton selon la revendication 3, **caractérisé en ce que** ces moyens sont constitués par un levier (5) monté pivotant sur le corps (3).

5. Mousqueton selon la revendication 4, **caractérisé en ce que** son corps (3) comprend un oeillet (13) à son extrémité recevant la base du linguet (4), et le levier (5) comprend une paroi tubulaire (19) prenant appui et glissant contre le corps (3) au niveau de cet oeillet (13).

6. Mousqueton selon la revendication 4 ou la revendication 5, **caractérisé en ce que** le levier (5) s'étend sur la majeure partie du côté du corps (3) opposé au linguet (4), sur l'extérieur de celui-ci.

7. Mousqueton selon l'une des revendications 4 à 6, **caractérisé en ce que** le levier (5) présente une section transversale en forme de U et enveloppe le côté du corps (3) le long duquel il s'étend.

8. Mousqueton selon l'une des revendications 1 à 6, **caractérisé en ce que** la lumière (15) présente une forme de chevron, la portion de cette lumière (15) dans laquelle se trouve normalement l'extrémité (4a) étant orientée sensiblement perpendiculairement à la branche latérale du linguet (4) raccordée à cette même extrémité (4a), et l'autre portion de cette lumière (15) formant un angle d'environ 145° avec cette première portion.

9. Mousqueton selon l'une des revendications 5 à 8, **caractérisé en ce que** le corps (3) comprend une lumière (16) en léger arc de cercle centré sur l'axe de l'oeillet (13), et **en ce que** le levier (5) comprend un téton (21) engagé et pouvant coulisser dans cette lumière (16).

## Patentansprüche

1. Sicherheits-Karabinerhaken, mit einer als "Haarnadel" bezeichneten Sperrklinke (4), d.h., die durch einen Schaft aus elastisch verformbarem Material gebildet ist, der umgebogen ist, um eine offene Schleife zu bilden, wobei die gekrümmten Enden (4a, 4b) des Schaftes, um die sich die Verschwenkung der Sperrklinke (4) bezüglich dem Körper (3) des Karabinerhakens (2) vollzieht, nicht koaxial sind, wobei die Anordnung derart ausgebildet ist, daß der Schaft während dieser Verschwenkung elastisch verformt wird und die Sperrklinke (4) durch elastische Rückstellung in die Schließstellung des Karabinerhakens (2) zurückbewegt wird; wobei das eine der Löcher des Körpers (3), das das eine der gekrümmten Enden (4a, 4b) aufnimmt, eine oblonge Form aufweist, während das andere der Löcher des Körpers (3), das das andere gekrümmte Ende (4b) aufnimmt, eine zylindrische Form aufweist, derart, daß dieses andere gekrümmte Ende (4b) an dem Körper (3) um eine feststehende Achse verschwenkbar angebracht ist;
wobei der Karabinerhaken **dadurch gekennzeichnet ist, daß**
- die Sperrklinke (4) derart ausgebildet ist, daß ihre gekrümmten Enden (4a, 4b) normalerweise in einer Beabstandungsstellung gehalten sind, in der sie sich in einem Abstand zueinander befinden, der jede Möglichkeit der Verschwenkung bezüglich dem Körper (3) unterbindet, und daß sie derart verformt werden kann, daß die gekrümmten Enden (4a, 4b) in eine gegenseitige Annäherungsstellung gebracht werden, um diese Verschwenkung möglich zu machen, und daß
- das Loch des Körpers (3), das die oblonge Form aufweist, durch einen Schlitz (15) gebildet ist, in den das in dieses Loch eingreifende gekrümmte Ende (4a) eingreift und darin verschiebbar ist, wobei dieser Schlitz (15) dazu ausgebildet ist, die Verschiebung dieses gekrümmten Endes (4a) zwischen der Beabstandungsstellung und der Annäherungsstellung der beiden gekrümmten Enden (4a, 4b) der Sperrklinke (4) zu ermöglichen.

2. Karabinerhaken nach Anspruch 1, **dadurch gekennzeichnet, daß** die Sperrklinke (4) derart ausgebildet ist, daß sie in Richtung der Annäherung der Enden (4a, 4b) vorgespannt ist, wenn sie an dem Körper (3) angebracht und die gekrümmten Enden (4a, 4b) zueinander beabstandet sind.

3. Karabinerhaken nach Anspruch 1 oder Anspruch 2, **dadurch gekennzeichnet, daß** er Mittel (5) aufweist, die mit der Sperrklinke (4) in Anlage kommen, um die Verformung derselben zu bewerkstelligen.

4. Karabinerhaken nach Anspruch 3, **dadurch gekennzeichnet, daß** die Mittel durch einen verschwenkbaren am Körper (3) angebrachten Hebel (5) gebildet sind.

5. Karabinerhaken nach Anspruch 4, **dadurch gekennzeichnet, daß** sein Körper (3) eine Öse (13) an seinem Ende aufweist, das die Basis der Sperrklinke (4) aufnimmt, und daß der Hebel (5) eine rohrförmige Wand (19) aufweist, die gleitend gegen den Körper (3) auf Höhe dieser Öse (13) anliegt.

6. Karabinerhaken nach Anspruch 4 oder Anspruch 5, **dadurch gekennzeichnet, daß** sich der Hebel (5) über den Hauptteil der Seite des Körpers (3), die der Sperrklinke (4) gegenüberliegt, auf deren Außenseite erstreckt.

7. Karabinerhaken nach einem der Ansprüche 4 bis 6, **dadurch gekennzeichnet, daß** der Hebel (5) einen Querschnitt in Form eines U aufweist und die Seite des Körpers (3) umkleidet, entlang der er sich erstreckt.

8. Karabinerhaken nach einem der Ansprüche 1 bis 6, **dadurch gekennzeichnet, daß** der Schlitz (15) die Form eines Dachgiebels aufweist, wobei der Abschnitt des Schlitzes (15), in dem sich normalerweise das Ende (4a) befindet, etwa senkrecht zu dem seitlichen Schenkel der Sperrklinke (4), der mit diesem Ende (4a) verbunden ist, orientiert ist, und der andere Abschnitt des Schlitzes (15) einen Winkel von etwa 145° mit diesem ersten Abschnitt bildet.

9. Karabinerhaken nach einem der Ansprüche 5 bis 8, **dadurch gekennzeichnet, daß** der Körper (3) einen Schlitz (16) in Form eines leichten Kreisbogens aufweist, der um die Achse der Öse (13) zentriert ist, und daß der Hebel (5) einen Zapfen (21) aufweist, der in diesen Schlitz (16) eingreift und darin verschiebbar ist.

## Claims

1. A safety snap-hook comprising a catch (4) which is termed a "pin", i.e. which is formed by a rod made of an elastically deformable material which is bent to form an open loop, wherein the bent ends (4a, 4b) of said rod, around which the catch (4) swivels with respect to the body (3) of the snap-hook (2), are not coaxial, the assembly being formed such that said rod is elastically deformed during said swivelling and that the catch (4) is brought back, by an elastic return motion, into the closed position of the snap-hook (2); one hole in the body (3), which receives one of said bent ends (4a, 4b), is oblong in shape, whilst the other hole in the body (3) which receives the other bent end (4b) is cylindrical in shape such that said other bent end (4b) is swivel-mounted on the body (3) about a fixed axis;
said snap-hook **characterised in that**
- the catch (4) is formed in a manner such that its bent ends (4a, 4b) are normally maintained in a remote position in which they are situated at a distance from each other and prevent any possibility of swivelling with respect to the body (3), and can be deformed so as to bring said bent ends (4a, 4b) into a position of mutual proximity to make said swivelling possible, and **in that**
- said hole in the body (3) which is oblong in shape is formed by a slot (15) in which said bent end (4a) which fits into said hole engages and can slide, said slot (15) being formed in order to permit the sliding of said bent end (4a) between the remote and adjacent positions of the two bent ends (4a, 4b) of the catch (4).

2. A snap-hook according to claim 1, **characterised in that** the catch (4) is formed so that it is biased in the direction of approach of the ends (4a, 4b) when it is mounted on the body (3) and the bent ends (4a, 4b) are remote from each other.

3. A snap-hook according to claims 1 or 2, **characterised** it comprises means (5) which are supported on the catch (4) in order to effect the deformation of the latter.

4. A snap-hook according to claim 3, **characterised in that** said means are formed by a lever (5) which is swivel-mounted on the body (3).

5. A snap-hook according to claim 4, **characterised in that** its body (3) comprises an eyelet (13) at its end which receives the base of the catch (4), and the lever (5) comprises a tubular wall (19) which is supported against and which slides against the body (3) at said eyelet (13).

6. A snap-hook according to claims 4 or 5, **characterised in that** the lever (5) extends on the outside of the body, over the major part of the side of the body (3) which is opposite to the catch (4).

7. A snap-hook according to any one of claims 4 to 6, **characterised in that** the lever (5) has a U-shaped cross-section and covers the side of the body (3) along which it extends.

8. A snap-hook according to any one of claims 1 to 6, **characterised in that** the slot (15) is V-shaped, the portion of said slot (15) in which the end (4a) is normally situated being oriented substantially perpendicularly to the side leg of the catch (4) which is attached to the same end (4a), and the other portion of said slot (15) forming an angle of about 145° with said first portion.

9. A snap-hook according to any one of claims 5 to 8, **characterised in that** the body (3) comprises a slot (16) in the form of a short arc of a circle which is centred on the axis of the eyelet (13), and **in that** the lever (5) comprises a stud (21) which fits into and which can slide in said slot (16).
